# EUROPEAN PATENT SPECIFICATION

(11) **EP 4 202 487 B1**
(45) Date of publication and mention of the grant of the patent: **03.09.2025**
(21) Application number: 22215848.7
(22) Date of filing: 22.12.2022
(51) Int. Cl.: G01S 11/02, G01S 5/00, G01S 5/02, G01S 13/76, G07C 9/00

(54) **UWB DEVICE AND CONTROL METHOD THEREOF**
UWB-VORRICHTUNG UND STEUERUNGSVERFAHREN DAFÜR
DISPOSITIF UWB ET PROCÉDÉ DE COMMANDE ASSOCIÉ

(30) Priority: 27.12.2021 KR 20210188614
(43) Date of publication of application: 28.06.2023
(73) Proprietor: Hyundai Mobis Co., Ltd., Gangnam-gu Seoul 06141 (KR)
(72) Inventor: LIM, Jong Chul, 16891 Yongin-si, Gyeonggi-do (KR)
(74) Representative: Vossius & Partner Patentanwälte Rechtsanwälte mbB

(56) References cited:
- EP-A1- 4 145 175
- EP-A2- 4 137 838
- US-A1- 2020 137 676
- US-A1- 2020 366 335

## Description

### CROSS-REFERENCE TO RELATED APPLICATION

### FIELD

Exemplary embodiments of the present disclosure relate to an ultra-wideband (UWB) device and a control method thereof, and more particularly, to a UWB device and a control method thereof, wherein, when an anchor in the UWB device has successively failed a ranging procedure, the UWB device may enter a sleep mode by setting a maximum standby count corresponding to a UWB receiver window, thereby minimizing unnecessary power consumption caused by infinite standby of a UWB signal that cannot be covered.

### DISCUSSION OF THE BACKGROUND

US 2020/366335 A1 relates to an operation method of a first electronic device including transmitting a first ranging control message (RCM) comprising interval information to a second electronic device, determining a first time to transmit a second RCM based on the interval information, determining a first RCM timing window (RTW) based on the first time, transmitting the second RCM to the second electronic device in the first RTW, and transmitting a third RCM at a second time in a second RTW, based on a failure to receive a response message corresponding to the second RCM within a specific time period in the first RTW, wherein the second time is a random time point in the second RTW.

US 2020/137676 A1 relates to a method of operating a controller that performs a ranging with a controlee using ultra wideband communication in a wireless communication system, the method including: transmitting, to the controlee, a first ranging control message comprising information of a first ranging interval for a second RCM; changing a ranging interval for the second RCM from the first ranging interval to a second ranging interval; transmitting, to the controlee, an interval update message for the second RCM comprising information for the changed ranging interval based on the first ranging interval; and transmitting, to the controlee, the second RCM based on the changed ranging interval.

In general, a smart key (SMK) system locates a smart key (or a fob key), controls locking/unlocking of a vehicle door, and starts a vehicle using low frequency (LF, 125 kHz) or radio frequency (RF, 434MHz) technology.

Some technologies, such as the global positioning system (GPS), Wi-Fi, and Bluetooth^{®}, are used in order to provide local based services (LBSs), in which it is difficult to enable precise measurement. In contrast, ultra-wideband (UWB) has advantages such as a wide frequency band, low power communication, and high-precision positioning on a level of tens of centimeters.

Here, the UWB is a technology for calculating the distance between communicating parties by multiplying a signal travel time between the communicating parties by the velocity of light using time of flight (ToF) technology.

Conventional position tracking technologies based on the GPS and mobile communications networks have an error range of approximately 5 m to 50 m and 50 m to 200 m, respectively. With the GPS, a satellite signal may fail to reach a GPS receiver in a dense cluster of buildings in a city.

Here, Wi-Fi technology may enable position tracking at low cost. However, with increases in the number of objects to be tracked, channel division may be limited, since the available frequency band is narrow. In addition, the connection of a mobile terminal to a stationary access point (AP) may be disconnected.

Bluetooth^{®} technology enables a plurality of sensors to be disposed at low cost. However, due to high communication latency, Bluetooth^{®} technology is not suitable for real-time positioning tracking in a dynamic environment.

In contrast, UWB technology uses a wide frequency band unlike Wi-Fi technology or Bluetooth^{®} technology, and can transmit a large amount of information with low power and at a high transmission rate.

Positioning using UWB technology has advantages, such as a low error range on a level of about 20 cm, high transmittance with respect to obstacles, and the ability to not be influenced by other signals, for example, Wi-Fi signals.

Here, an operation of measuring the distance between a fob (or a fob key) and an anchor is referred to as ranging. In this case, a data structure is based on the IEEE802.15.4z standard, and about 200 µs is taken for the transmission of one packet. In addition, a slot is defined as an amount of time taken for the fob or the anchor to transmit a following signal (or receive a signal) after transmitting a signal once.

A background technology of the present disclosure is disclosed in Korean Patent Application Publication No. 10-2021-0137841 (published November 18, 2021, entitled "UWB System").

### SUMMARY

When ranging is performed using UWB technology as described above, the anchor opens a receiver window before an expected reception time by RX_MARGIN_TIME (e.g., 10 ms) for standby of a signal allocated to each slot, and maintains the receiver window opened after the expected reception time by RX_TIMEOUT (e.g., 10 ms).

The reason for which the receiver window is opened before and after the expected reception time is to overcome a time error that would otherwise be caused by the difference of the clock CLK between a smartphone and the anchor.

For example, when the clock CLK of the smartphone performing the ranging once every 500 ms has a time error of +1000 ppm and the clock CLK of the anchor has a time error of -1000ppm, a clock difference of 2000 ppm (=1 ms) per 500 ms occurs. Thus, the time for which the ranging may be continued may vary depending on the length of the receiver window.

In this case, when a set value is RX_MARGIN_TIME (e.g., 10 ms) + RX_TIMEOUT (e.g., 10 ms) = 20 ms, the ranging may be only continued 20 times every 500 ms.

In this manner, when the RX_MARGIN_TIME/RX_TIMEOUT time of the receiver window is longer, the ranging may be continued for a longer time. In contrast, unnecessary consumption of power (or current) increases by the time during which the receiver window is opened, which may be problematic.

In addition, according to physical characteristics of UWB communication, it is highly probable that an anchor opposite to a vehicle with respect to the smartphone may fail wireless communication due to the vehicle acting as an obstacle through metal components included therein.

Thus, even in the case in which the anchor opposite to the vehicle is standing by for the ranging, when a reception signal is not continuously provided at actual estimated times, the time error between the smartphone and the anchor caused by the difference of the clock CLK accumulates. In this case, when the ranging succeeds at an estimated reception time, the time error occurring/accumulated due to the difference of the clock is reset with respect to the succeeded time. However, in the case that the ranging has successively failed, the time error is accumulated.

When the ranging every 500 ms has failed 20 times, the ranging may not succeed even in the case that the smartphone has entered a radio communication available area. That is, while the anchor operates, substantially all ranging attempts fail, thereby consuming power needlessly.

The present disclosure has been made in an effort to solve the above-described problems, and an objective of the present disclosure is directed to a UWB device and a control method thereof, wherein, when an anchor in the UWB device has successively failed a ranging procedure, the UWB device may enter a sleep mode by setting a maximum standby count corresponding to a UWB receiver window, thereby minimizing unnecessary power consumption caused by infinite standby of a UWB signal that cannot be covered.
The invention is set out in the appended set of claims. Any references in the following description to embodiments, objects, aspects and/or examples, which are not covered by the appended claims, are considered as not being part of the present invention.

In an embodiment, provided is a UWB device including: a communications part configured to transmit and receive a packet to and from a mobile device; a memory in which a program for performing ranging and a maximum standby count are stored; and a processor configured to execute the program. The processor performs the ranging together with the mobile device on basis of a set reception window, when the ranging fails the processor is configured to count a standby counter, and when the standby counter is equal to or greater than the maximum standby count, the processor is configured to exit a standby mode and enter a sleep mode.

When the ranging succeeds, the processor is configured to clear the standby counter.

The maximum standby count is set according to a length of the reception window, wherein the length of the reception window is set to account for an accumulated time error between a clock of the UWB device and a clock of the mobile device.

When the ranging succeeds, the processor may output a result of the ranging.

The mobile device may include at least one of a fob key and a smart phone.

Also provided is a control method of the UWB device, the control method including: performing, by a processor, ranging together with a mobile device on basis of a set reception window; when the ranging performed by the processor fails, counting, by the processor, a standby counter; when the ranging performed by the processor succeeds, clearing, by the processor, the standby counter; and comparing, by the processor, the standby counter with a maximum standby count, and repeating the ranging or entering a sleep mode.

The maximum standby count is set according to a length of the reception window, wherein the length of the reception window is set to account for an accumulated time error between a clock of the UWB device and a clock of the mobile device.

The control method may further include outputting, by the processor, a result of the ranging when the ranging succeeds.

In the repeating of the ranging or the entering of the sleep mode, the standby counter may be compared with the maximum standby count. When the standby counter is less than the maximum standby count, the processor repeats the ranging. When the standby counter is equal to or greater than the maximum standby count, the processor exits a standby mode enters the sleep mode.

In the UWB device and the control method thereof according to aspects of the present disclosure, when the anchor in the UWB device has successively failed a ranging procedure, the UWB device may enter a sleep mode by setting a maximum standby count corresponding to a UWB receiver window, thereby minimizing unnecessary power consumption caused by infinite standby of a UWB signal that cannot be covered.

### BRIEF DESCRIPTION OF THE DRAWINGS

FIG. 1 is a block diagram illustrating a configuration of a UWB device according to an embodiment of the present disclosure;
FIG. 2 is a table illustrating the results of tests of times in which the UWB device according to an embodiment of the present disclosure may return when ranging fails depending on the receiver window; and
FIG. 3 is a flowchart illustrating a control method of a UWB device according to an embodiment of the present disclosure.

### DETAILED DESCRIPTION OF THE ILLUSTRATED EMBODIMENTS

Hereinafter, a UWB device and a control method thereof will be described below with reference to the accompanying drawings. In the specification and drawings, thicknesses of lines in the drawings and sizes of constituent elements may be exaggerated for clarity and convenience. Further, the following terms will be defined, considering functions thereof in the present disclosure, and may be varied according to intentions and customs of a user or an operator. Therefore, the terms should be defined on the basis of the contents of the entire specification.

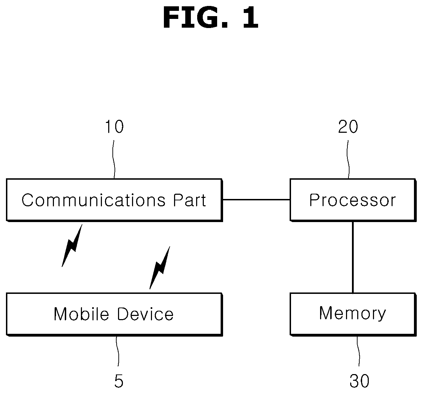

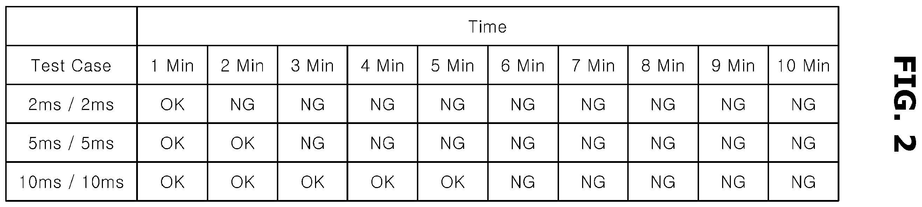

FIG. 1 is a block diagram illustrating a configuration of a UWB device according to an embodiment of the present disclosure, and FIG. 2 is a table illustrating the results of tests of times in which the UWB device according to an embodiment of the present disclosure may return when ranging fails depending on the receiver window.

As illustrated in FIG. 1, the UWB device according to an embodiment of the present disclosure may include a communications part 10, a memory 30, and a processor 20.

The communications part 10 may transmit and receive a packet to and from a mobile device 5 on the basis of UWB communication. The communications part 10 may be implemented as a module, a device, a circuit, an antenna, or the like for UWB communication. The configuration of the communications part 10 may be realized using a technology well-known in the technical field to which the present disclosure pertains, and thus a further detailed description thereof will be omitted.

Here, the mobile device 5 may include at least one of a fob key and a smartphone.

The memory 30 may have a ranging program stored therein, and a maximum standby count set according to the reception window may be stored in the memory 30.

Here, the maximum standby count is a reception standby time in which ranging may fail even in the case in which a standby operation is performed by adjusting the reception window. The maximum standby count may be used to set a termination time at which the standby operation is terminated instead of being infinitely performed.

For example, FIG. 2 is a table illustrating actual test measurements of times in which the UWB device may return to a normal mode when the ranging has successively failed in a situation in which the reception windows RX_MARGIN_TIME/RX_TIMEOUT are 2ms/2ms, 5ms/5ms, and 10ms/10ms, respectively. Here, there may be variations in elements according to anchor samples as well as variations according to smartphone manufacturers/samples.

As illustrated in FIG. 2, when the reception window is 2ms/2ms, it can be appreciated that, when returning to the normal mode has failed through repetition of about 1 minute, the ranging will fail successively even in the case the standby operation is performed for 10 minutes. In addition, when the reception window is 10ms/10ms, it can be appreciated that, when returning to the normal mode has failed through repetition of about 5 minutes, the ranging will fail successively.

Thus, when the reception window is 10ms/10ms, the maximum standby count may be set to be 5 minutes or 1,000 times.

For example, when the ranging is performed once every about 300 ms, the ranging may be performed 1,000 for 300,000 ms (=300 seconds=5 minutes). Therefore, when the ranging has failed successively for 1,000 times, it is meaningless to maintain the reception standby mode for the ranging in current reception window conditions (RX_MARGIN_TIME/RX_TIMEOUT=10 ms/10 ms), since the ranging fails due to the distorted window.

Thus, the ranging reception standby time may be set in reception window conditions and maximum standby count conditions, thereby minimizing needless consumption of power.

The processor 20 may execute the program stored in the memory 30.

That is, the processor 20 may perform the ranging together with the mobile device 5 on the basis of the reception window. Here, performing the ranging is a technology well-known in the technical field to which the present disclosure pertains, and thus a further detailed description thereof will be omitted.

When the ranging fails, the processor 2 counts a standby counter. Here, when the ranging succeeds at least once, the standby counter is cleared and the result of the ranging is output.

In this manner, the processor 20 counts the standby counter while performing the ranging. When the ranging fails and the standby counter is equal to or greater than the maximum standby count, the processor 20 may exit the reception standby mode for the ranging and enter a sleep mode.

As described above, in the UWB device according to an embodiment of the present disclosure, when the anchor in the UWB device has successively failed the ranging, the UWB device enters the sleep mode by setting the maximum standby count corresponding to the reception window. In this manner, the UWB device may minimize unnecessary consumption of power that would otherwise be caused by infinite standby of a UWB signal that cannot be covered.

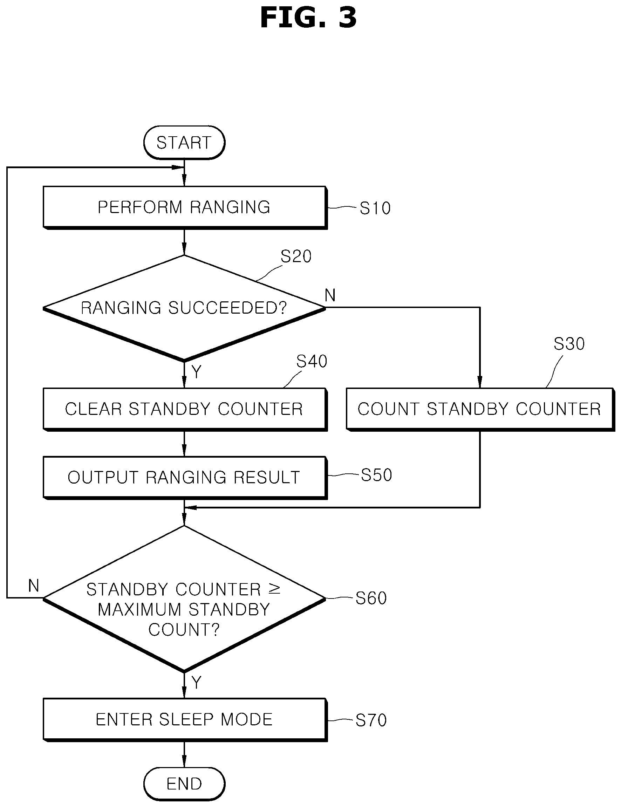

FIG. 3 is a flowchart illustrating a control method of a UWB device according to an embodiment of the present disclosure.

As illustrated in FIG. 3, in the control method of a UWB device according to an embodiment of the present disclosure, first, the processor 20 performs ranging together with a mobile device on the basis of a reception window set for UWB ranging in S10.

After the ranging is performed in step S10, the processor 20 determines whether or not the ranging has succeeded in S20.

When the ranging fails instead of succeeding in step S20, the processor 20 counts a standby counter in S30.

In contrast, when the ranging succeeds in step S20, the processor 20 clears the standby count in S40.

In addition, the processor 20 outputs the result of the ranging in S50.

After the standby counter is counted in step S30 in response to the failure of the ranging in step S20 or when the result of the ranging is output in response to the success of the ranging in step S20, the processor 20 compares a maximum standby count with the standby counter in S60.

Here, the maximum standby count is a reception standby time in which the ranging may fail even in the case in which a standby operation is performed by adjusting the reception window. The maximum standby count may be used to set a termination time at which the standby operation is terminated instead of being infinitely performed.

When the standby counter is equal to or greater than the maximum standby count as the result of the comparison of the maximum standby count with the standby counter in step S60, the processor 20 exits the reception standby mode and enters a sleep mode in S70.

When the standby counter is less than the maximum standby count as the result of the comparison of the maximum standby count with the standby counter in step S60, the processor returns to step S10 to perform the ranging.

In the control method of a UWB device according to an embodiment of the present disclosure as described above, when the anchor in the UWB device has successively failed the ranging, the UWB device enters the sleep mode by setting the maximum standby count corresponding to the reception window. In this manner, the UWB device may minimize unnecessary consumption of power that would otherwise be caused by infinite standby of a UWB signal that cannot be covered

Implementations described in the present specification can be made by, for example, a method or a process, a device, a software program, a data stream, or a signal. Although the implementations are discussed only in the context of a single form (for example, discussed by the method only), the discussed features can also be implemented by another form (for example, a device or a program). The device can be implemented by suitable hardware, software, and firmware. The method can be implemented, for example, in a computer, a microprocessor, an integrated circuit, or a device such as a processor that generally refers to a processing device including a programmable logic device.

## Claims

1. A ultra-wideband, UWB, device comprising:
a communications part (10) configured to transmit and receive a packet to and from a mobile device (5),
a memory (30) in which a program for performing ranging and a maximum standby count are stored, and
a processor (20) configured to execute the program,
wherein the processor performs the ranging together with the mobile device on basis of a reception window (S10),
wherein the maximum standby count is set according to a length of the reception window, wherein the length of the reception window is set to account for an accumulated time error between a clock of the UWB device and a clock of the mobile device, and
wherein when the ranging succeeds (S20) the processor is configured to clear a standby counter (S40),
when the ranging fails, the processor is configured to count the standby counter (S30), and
when the counted standby counter is equal to or greater than the maximum standby count (S60),
the processor is configured to exit a standby mode and enter a sleep mode (S70).

2. The UWB device of claim 1, wherein, when the ranging succeeds, the processor outputs a result of the ranging (S50).

3. The UWB device of any of the preceding claims, wherein the mobile device comprises at least one of a fob key and a smart phone.

4. A control method of the ultra-wideband, UWB, device, the control method comprising:
performing, by a processor (20),
ranging together with a mobile device (5) on basis of a reception window (S10);
when the ranging performed by the processor fails, counting, by the processor, a standby counter (S30);
when the ranging performed by the processor succeeds (S20), clearing, by the processor, the standby counter (S40); and
comparing, by the processor, the standby counter with a maximum standby count (S60), and repeating the ranging or entering a sleep mode,
wherein the maximum standby count is set according to a length of the reception window, wherein the length of the reception window is set to account for an accumulated time error between a clock of the UWB device and a clock of the mobile device,
wherein when the counted standby counter is equal to or greater than the maximum standby count (S60), exiting a standby mode and entering a sleep mode (S70).

5. The control method of claim 4, further comprising outputting, by the processor, a result of the ranging (S50) when the ranging succeeds.

6. The control method any of claims 4 and 5, wherein the mobile device comprises at least one of a fob key and a smart phone.

## Patentansprüche

1. Ultrabreitband-, UWB-Vorrichtung, die aufweist:
eine Kommunikationskomponente (10), die konfiguriert ist, ein Paket an eine mobile Vorrichtung (5) zu senden und davon zu empfangen,
einen Speicher (30), in dem ein Programm zur Durchführung einer Entfernungsmessung und eines maximalen Standby-Zähler gespeichert sind, und
einen Prozessor (20), der konfiguriert ist, das Programm auszuführen,
wobei der Prozessor die Entfernungsmessung zusammen mit der mobilen Vorrichtung auf der Basis eines Empfangsfensters (S10) durchführt,
wobei der maximale Standby-Zähler entsprechend einer Länge des Empfangsfensters festgelegt wird, wobei die Länge des Empfangsfensters festgelegt wird, um einen akkumulierten Zeitfehler zwischen einer Uhr der UWB-Vorrichtung und einer Uhr der mobilen Vorrichtung zu berücksichtigen, und
wobei, wenn die Entfernungsmessung erfolgreich ist (S20), der Prozessor konfiguriert ist, einen Standby-Zähler zu löschen (S40),
wenn die Entfernungsmessung fehlschlägt, der Prozessor konfiguriert ist, den Standby-Zähler zu erhöhen (S30), und
wenn der hochgezählte Standby-Zähler gleich oder größer als der maximale Standby-Zähler ist (S60), ist der Prozessor konfiguriert, einen Standby-Modus zu verlassen und in einen Ruhemodus einzutreten (S70).

2. UWB-Vorrichtung nach Anspruch 1, wobei der Prozessor, wenn die Entfernungsmessung erfolgreich ist, ein Entfernungsmessungsergebnis ausgibt (S50).

3. UWB-Vorrichtung nach einem der vorhergehenden Ansprüche, wobei die mobile Vorrichtung mindestens eines von einem Funkschlüsselanhänger oder einem Smartphone aufweist.

4. Steuerverfahren für die Ultrabreitbandvorrichtung, UWB, wobei das Steuerverfahren aufweist:
Durchführen einer Entfernungsmessung durch einen Prozessor (20) zusammen mit einer mobilen Vorrichtung (5) auf der Basis eines Empfangsfensters (S10),
wenn die vom Prozessor durchgeführte Entfernungsmessung fehlschlägt, Hochzählen eines Standby-Zählers (S30) durch den Prozessor,
wenn die vom Prozessor durchgeführte Entfernungsmessung erfolgreich ist (S20), Löschen des Standby-Zählers (S40) durch den Prozessor, und
Vergleichen des Standby-Zählers durch den Prozessor mit einem maximalen Standby-Zähler (S60),
und Wiederholen der Entfernungsmessung oder Eintritt in einen Ruhemodus,
wobei der maximale Standby-Zähler entsprechend einer Länge des Empfangsfensters festgelegt wird, wobei die Länge des Empfangsfensters festgelegt wird, um einen akkumulierten Zeitfehler zwischen einer Uhr der UWB-Vorrichtung und einer Uhr der mobilen Vorrichtung zu berücksichtigen,
wobei, wenn der hochgezählte Standby-Zähler gleich oder größer als der maximale Standby-Zählerstand ist (S60), ein Standby-Modus verlassen und in den Ruhemodus übergegangen wird (S70).

5. Steuerverfahren nach Anspruch 4, das weiterhin aufweist, das Ergebnis der Entfernungsmessung (S50) durch den Prozessor auszugeben, wenn die Entfernungsmessung erfolgreich ist.

6. Steuerverfahren nach einem der Ansprüche 4 und 5, wobei die mobile Vorrichtung mindestens einen Funkschlüsselanhänger oder ein Smartphone aufweist.

## Revendications

1. Dispositif à bande ultra-large, UWB, comprenant :
une partie de communication (10) configurée pour émettre et recevoir un paquet vers et depuis un dispositif mobile (5),
une mémoire (30) dans laquelle sont stockés un programme de télémétrie et un nombre de veilles maximum, et
un processeur (20) configuré pour exécuter le programme,
dans lequel le processeur effectue la télémétrie conjointement avec le dispositif mobile sur la base d'une fenêtre de réception (S10),
dans lequel le nombre de veilles maximum est défini en fonction d'une longueur de la fenêtre de réception, la longueur de la fenêtre de réception étant définie pour tenir compte d'une erreur temporelle accumulée entre une horloge du dispositif UWB et une horloge du dispositif mobile, et
dans lequel, quand la télémétrie réussit (S20), le processeur est configuré pour effacer un compteur de veilles (S40),
quand la télémétrie échoue, le processeur est configuré pour décompter le compteur de veilles (S30), et
quand le compteur de veilles décompté est égal ou supérieur au nombre de veilles maximum (S60), le processeur est configuré pour sortir d'un mode veille et entrer dans un mode sommeil (S70).

2. Dispositif UWB selon la revendication 1, dans lequel, quand la télémétrie réussit, le processeur sort un résultat de la télémétrie (S50).

3. Dispositif UWB selon l'une des revendications précédentes, dans lequel le dispositif mobile comprend l'un au moins d'un porte-clés et d'un smartphone.

4. Procédé de commande du dispositif à bande ultra-large, UWB, le procédé de commande comprenant les étapes consistant à :
effectuer, via un processeur (20), une télémétrie conjointement avec un dispositif mobile (5) sur la base d'une fenêtre de réception (S10),
quand la télémétrie effectuée par le processeur échoue, décompter, via le processeur, un compteur de veilles (S30),
quand la télémétrie effectuée par le processeur réussit (S20), effacer, via le processeur, le compteur de veilles (S40) ; et
comparer, via le processeur, le compteur de veilles à un nombre de veilles maximum (S60),
et répéter la télémétrie ou entrer dans un mode sommeil,
dans lequel le nombre de veilles maximum est défini en fonction d'une longueur de la fenêtre de réception, la longueur de la fenêtre de réception étant définie pour tenir compte d'une erreur temporelle accumulée entre une horloge du dispositif UWB et une horloge du dispositif mobile,
dans lequel, quand le compteur de veilles décompté est égal ou supérieur au nombre de veilles maximum (S60), sortir d'un mode veille et entrer dans un mode sommeil (S70).

5. Procédé de commande selon la revendication 4, comprenant en outre l'étape consistant à sortir, via le processeur, un résultat de la télémétrie (S50) quand la télémétrie réussit.

6. Procédé de commande selon l'une des revendications 4 et 5, dans lequel le dispositif mobile comprend l'un au moins d'un porte-clé et d'un smartphone.
